Europäisches Patentamt

European Patent Office

Office européen des brevets

(11) Veröffentlichungsnummer : **0 501 161 B1**

# (12) EUROPÄISCHE PATENTSCHRIFT

(45) Veröffentlichungstag der Patentschrift :
**27.04.94 Patentblatt 94/17**

(51) Int. Cl.$^5$ : **C02F 3/20**

(21) Anmeldenummer : **92101507.9**

(22) Anmeldetag : **30.01.92**

(54) **Vorrichtung zur Begasung von Abwässern.**

(30) Priorität : **01.03.91 DE 4106527**

(43) Veröffentlichungstag der Anmeldung :
**02.09.92 Patentblatt 92/36**

(45) Bekanntmachung des Hinweises auf die
Patenterteilung :
**27.04.94 Patentblatt 94/17**

(84) Benannte Vertragsstaaten :
**AT BE CH DE FR GB LI NL SE**

(56) Entgegenhaltungen :
**DE-A- 2 345 405**
**DE-A- 2 453 670**

(73) Patentinhaber : **HOECHST
AKTIENGESELLSCHAFT
D-65926 Frankfurt (DE)**

(72) Erfinder : **Doppelfeld, Wilhelm Peter
Bergerstrasse 84
W-5350 Euskirchen (DE)**
Erfinder : **Pieper, Werner, Dr.
Am Käferbruch 14
W-5014 Kerpen (DE)**
Erfinder : **Giechau, Wilhelm
Beselerstrasse 25
W-5030 Hürth (DE)**
Erfinder : **Roszinski, Hilmar, Dr.
Julius-Leber-Strasse 7
W-5042 Erftstadt (DE)**

**Beschreibung**

Die vorliegende Erfindung betrifft eine Vorrichtung zur Begasung von Abwässern in einem Begasungsbecken mit parallel nebeneinander und im Abstand zueinander angeordneten, waagerecht liegenden Begasungskästen, in deren Oberseiten Gasaustrittsöffnungen angeordnet und deren Unterseiten offen sind.

In der Technik sind zahlreiche Vorrichtungen für die Begasung von Abwässern vorbeschrieben.

Durch den direkten Eintrag von sauerstoffhaltigem Gas über Verteilerapparaturen unterhalb der Wasseroberfläche gelingt es, einen effektiven Sauerstoffübergang in dem Dreiphasensystem Luft/Wasser/Belebtschlammflocke bei gleichzeitiger mechanischer Schonung der Belebtschlammflocke zu erreichen.

Bei Eintrag des sauerstoffhaltigen Gases am Boden tiefer Belebungsbecken sind zur Überwindung des hydrostatischen Drucks entsprechend ausgelegte Kompressoren und technisch aufwendige Apparaturen notwendig, die nur unter hohem Energieaufwand, Aerosolbildung und Lärmemission betrieben werden können.

In der DE-C-2 345 405 wird eine Begasungsvorrichtung beschrieben, bei der sauerstoffhaltiges Gas mit niedrigeren Drücken und einfach gestalteten Begasungskästen dem Begasungbecken in geringerer Tiefe zugeführt wird.

Über Gasaustrittsöffnungen in der Oberseite der Begasungskästen tritt die Luft feinblasig aus. Durch geeignete Beckenform und -einbauten wird durch aufsteigende Luftblasen eine vertikale Wasserströmung erzeugt, in die das gesamte Wasservolumen des Begasungsbeckens eingebunden ist. Es wird eine hohe Durchmischung des Abwassers und damit ein effektiver Abbau organischer Wasserbestandteile erreicht. Gleichzeitig bilden sich aufgrund geringer mechanischer Belastung große Belebtschlammflocken.

Beim aeroben, biologischen Abbau organischer Ballaststoffe von calciumhaltigen Abwässern in dieser Art der Begasungsvorrichtung kommt es zur Verstopfung der Gasaustrittsöffnungen durch Aufwachsen mineralischer Ausfällungen. Das ist stets bei solchen Abwässern der Fall, die zur Säureneutralisation mit Kalk vorgeklärt werden. Insbesondere beim Zusammentreffen der carbonatreichen Rücklaufschlämme, die bei aerobem, biologischem Abbau organischer Wasserballaststoffe anfallen, und dem mit Kalk vorgeklärtem Abwasser kommt es zu verstärkter Bildung mineralischer Ausfällungen in den Gasaustrittsöffnungen der Begasungskästen. Je nach der Zusammensetzung des Abwassers können dabei innerhalb weniger Tage Betriebsdauer die Gasaustrittsöffnungen der Begasungskästen so weit verengt oder verstopft werden, daß die Luft nicht mehr in ausreichendem Maße feinblasig austritt und die Reinigungsleistung der Begasungsbecken abfällt. Das erfordert dann eine häufige Reinigung der Begasungskästen von mineralischen Ablagerungen mit mechanischen oder chemischen Verfahren. Während der Reinigungszeit steht die biologische Reinigungsstufe nur eingeschränkt zur Verfügung.

Der Erfindung liegt daher die Aufgabe zugrunde, die bewährte Einrichtung zum Eintrag von sauerstoffhaltigem Gas durch Begasungskästen so zu gestalten, daß keine Behinderung des Luftaustrittes durch mineralische Ausfällungen mehr auftritt und damit die Verfügbarkeit der Anlage über lange Zeiträume gewährleistet bleibt.

Diese Aufgabe konnte erfindungsgemäß dadurch gelöst werden, daß in den Gasaustrittsöffnungen 13 der Begasungskästen 14 bewegliche Rotationskörper angeordnet sind und die Gasaustrittsöffnungen 13 in bekannter Weise von unten je eine zentrale, einen Winkel $\alpha$ umschließende Ansenkung 12 aufweisen und die verbliebene Restwandstärke 15 der Gasaustrittsöffnung 13 jeder Ansenkung 12 0,5 bis 2 mm beträgt.

Die genannte Vorrichtung kann wahlweise auch noch dadurch weitergebildet sein, daß

a) der Rotationskörper aus Metall oder Kunststoff besteht;

b) der Rotationskörper aus einem Kopf- 1 und Fußteil 3 besteht, welche mit einem Halsteil 2 verbunden sind und der Kopfteil aus zwei Schlaufen 4 und 4' besteht, wobei die Achse 8 der Schlaufen 4 und 4' senkrecht zur Achse 7 des Halsteiles 2 steht und die Fläche der Schlaufen 4 und 4' um die Achse 8 um einen Winkel $\beta$ geneigt ist, und das Fußteil 3 aus zwei Bügeln 6 und 6' besteht, die mit dem Halsteil 2 verbunden sind und die am Halsteil 2 miteinander einen Winkel $\gamma$ bilden;

c) der Winkel $\beta$ 30 bis 60°, insbesondere 45°, beträgt;

d) die Winkel $\gamma$ und $\alpha$ gleich groß sind und mehr als 90°, aber weniger als 180°, vorzugsweise 100 bis 130°, insbesondere 120°, betragen;

e) der Rotationskörper im ruhenden Zustand um 5 bis 20 mm, insbesondere 15 mm, in der Gasaustrittsöffnung 13 in Richtung der Achse 7 des Halsteiles 2 verschiebbar ist;

f) der Rotationskörper aus Draht mit einem Durchmesser von 0,5 bis 5 mm, insbesondere von 1 bis 1,5 mm, gefertigt ist;

g) der Rotationskörper aus Blechbändern gefertigt ist und vorzugsweise eine Breite von 0,5 bis 5 mm, insbesondere von 1 bis 2 mm, und eine Dicke von 0,1 bis 0,5, insbesondere von 0,2 bis 0,3 mm hat;

h) die Schlaufe 4' als Stab 9 ausgebildet ist, der senkrecht zur Achse 7 des Halsteiles 2 angeordnet ist;

i) das Fußteil 3 aus einer Schlaufe 6" und einem Stab 10 gebildet ist;

j ) die Schlaufe 6" und der Stab 10 einen Winkel $\gamma$ bilden;

k) die Projektionen, in Richtung der Achse 7, der Bügel 6 und 6' gegenüber der Achse 8 um 90° verdreht sind;

l) die Schlaufe 6" eine Achse 11 hat und die aus der Schlaufe 6" gebildete Fläche um die Achse 11 um den Winkel $\beta$ verdreht ist;

m) die Neigungswinkel $\beta$ der Schlaufen 4 und 4' um die Achse 8 entgegengesetzte Drehrichtungen haben;

n) die Neigungswinkel $\beta$ der Schlaufe 4 um die Achse 8 und der Schlaufe 6" um die Achse 11 entgegengesetzte Drehrichtungen haben.

Der Luftstrom durch die Gasaustrittsöffnungen versetzt die Rotationskörper in Drehung. Hierdurch werden sowohl die Ansenkungen als auch die Restwandstärke und die Oberfläche um die Gasaustrittsöffnungen frei von Ausfällungen gehalten. Hinzu kommt noch eine zusätzliche Zerkleinerung der Luftblasen oberhalb der Gasaustrittsöffnungen, wodurch die Feinblasigkeit der Perlung unterstützt wird.

Für den Fachmann war dabei nicht ohne weiteres offensichtlich, daß besonders im Bereich der Reibungsfläche der Rotationskörper mit der Begasungseinrichtung keine zusätzliche Kristallisation ausgelöst wird.

Die erfindungsgemäßen Rotationskörper werden anhand der beigefügten Abbildungen näher erläutert:

Abb. 1     ist ein Schnitt durch die Achse des Rotationskörpers mit 2 Schlaufen.

Abb. 2     ist ein Schnitt durch die Achse des Rotationskörpers, wobei die Schnitte der Abb. 1 und Abb. 2 um 90° um die Achse verdreht sind.

Abb. 3     ist ein Schnitt durch die Achse des Rotationskörpers mit 1 Schlaufe im Kopfteil.

Abb. 4     ist ein Schnitt durch die Achse des Rotationskörpers, wobei die Schnitte der Abb. 3 und Abb. 4 um 90° um die Achse verdreht sind.

Abb. 5     ist ein Schnitt durch die Gasaustrittsöffnung an der Oberseite des Begasungskastens.

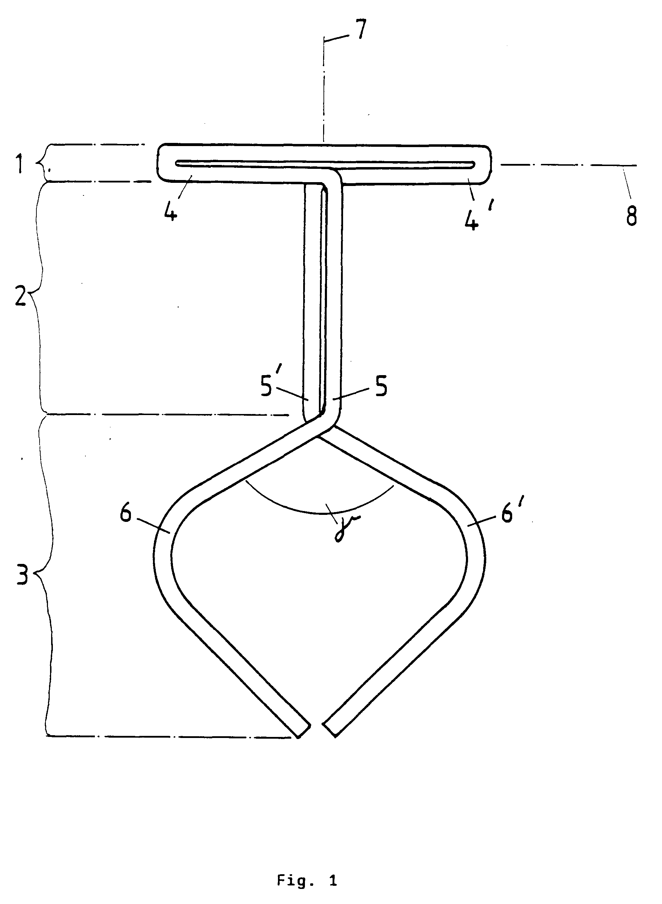

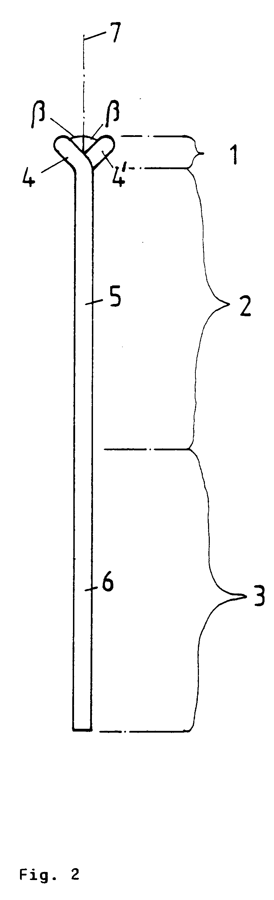

Zu Abb. 1 und Abb. 2:

Der Rotationskörper mit zwei Schlaufen besteht aus dem Kopfteil 1, welches durch die Schlaufen 4 und 4' gebildet wird. Das Kopfteil 1 wird über die Stäbe 5 und 5', die den Halsteil 2 mit der Achse 7 bilden, mit dem Fußteil 3 verbunden. Die Schlaufen 4 und 4' sind um eine Achse 8, die senkrecht zu der Achse 7 steht, angeordnet. Die von den Schlaufen 4 und 4' umrahmten Flächen sind um die Achse 8 um den Winkel $\beta$ geneigt. Das Fußteil 3 besteht aus den Bügeln 6 und 6'. Die Bügel 6 und 6' bilden am Halsteil einen Winkel $\gamma$. Durch Zusammendrücken der Bügel 6 und 6' wird der Rotationskörper von oben in die Gasaustrittsöffnung 13 eingeschoben.

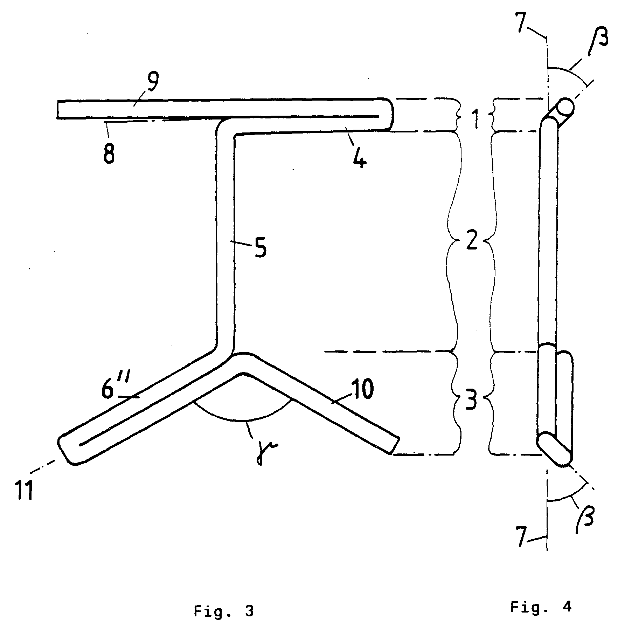

Zu Abb. 3 und Abb. 4:

Beim Rotationskörper mit nur einer Schlaufe im Kopfteil 1 ist die Schlaufe 4' zu einem Stab 9 verkümmert. Dieser Rotationskörper wird vor Ort in seine endgültige Form gebogen. Zum Zeitpunkt des Einsetzens des Rotationskörpers besteht dieser aus den Stäben 5 und 10 sowie der Schlaufe 6". Nach der Durchführung des Stabes 5 von unten durch die Gasaustrittsöffnung 13 wird der Stab 5 zur Schlaufe 4 sowie Stab 9 gebogen. Die Schlaufe 4 ist wie beim Rotationskörper mit zwei Schlaufen unter dem Winkel $\beta$ am Stab 5 angeordnet; der Stab 9 steht senkrecht auf dem Stab 5. Die Schlaufe 6" hat eine Achse 11. Die bei der Schlaufe gebildete Fläche ist unter einem Winkel $\beta$ um die Achse 11 geneigt. Die Schlaufe 6" und der Stab 10 bilden einen Winkel $\gamma$.

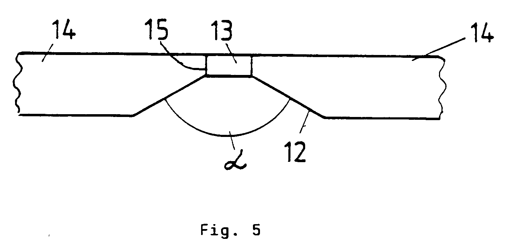

Zu Abb. 5:

In der Abb. 5 ist die Gasaustrittsöffnung 13 des aus der DE-C-2 345 405 bekannten Begasungskastens dargestellt.

In die Oberseite des Begasungskastens 14 ist die Gasaustrittsöffnung 13 gebohrt, die von unten durch die Ansenkung mit dem Winkel $\alpha$ vergrößert ist. In der Gasaustrittsöffnung 13 verbleibt die Restwandstärke 15.

Die Arbeitsweise mit den erfindungsgemäßen Rotationskörpern wird mit den folgenden Beispielen belegt.

Beispiel 1 (Vergleichsbeispiel)

In der zentralen Abwasserreinigungsanlage einer chemischen Industrie wird das Abwasser dreistufig behandelt. Durch mechanische und chemische Vorklärung mit Kalk wird ein vorgereinigtes Abwasser erzeugt, welches zum biologischen Abbau von Wasserballaststoffen einer Belebtschlammanlage aus 6 Begasungsbecken mit einem gesamten Beckeninhalt von 7500 m³ zugeführt wird. Der mittlere Abwasserdurchsatz beträgt 1000 m³/h.

Die Begasungsbecken sind mit Begasungskästen ausgerüstet und für einen Abbau von 12 t/d BSB ausgelegt. Über 4 Ventilatoren werden je 30000 m³/h Luft in 66 Begasungskästen pro Becken 1 m unter der Wasseroberfläche in das System eingeblasen. Die Begasungskästen bestehen aus U-förmigen Hohlkörpern aus Kunststoff mit der Öffnung nach unten. In diese Hohlkörper wird soviel Luft eindosiert, daß die Luft nur durch

EP 0 501 161 B1

5 mm große Bohrungen feinblasig aus den Gasaustrittsöffnungen der Begasungskästen austreten kann.

Bei pH-Werten von 7 bis 10 im Begasungsbecken dient der größte Teil der Ausfällung zur Bildung der mineralischen Trägerstruktur der Belebtschlammflocken.

Nach einer Betriebsdauer von 6 Tagen sind die meisten Gasaustrittsöffnungen in den Begasungskästen durch mineralische Ausfällungen weitgehend verengt. Bei fortschreitender Verstopfung weiterer Gasaustrittsöffnungen quillt die Luft unten aus den Hohlkörpern aus. Das Sprudelbild der Anlage zeigt deutlich die zurückgehende Bildung feiner Luftblasen an. Bei gleichbleibender Belastung der Anlage mit abbaubaren Wasserinhaltsstoffen sank der Sauerstoffgehalt im Begasungsbecken auf unter 1 % ab.

Durch mechanische und chemische Reinigung der Begasungskästen im 3-Tage-Zyklus wurde die Leistungsfähigkeit der Anlage aufrechterhalten. Dazu war die Außerbetriebnahme des jeweiligen Beckens und Absenken des Wasserspiegels unter die Begasungseinrichtung notwendig, wodurch in diesem Teil der Abwasserreinigung keinerlei Abbau der Wasserballaststoffe erfolgte.

Beispiel 2

Gegenüber Beispiel 1 werden die Gasaustrittsöffnungen einzelner Begasungskästen an ausgewählten Stellen in einem Begasungsbecken mit erfindungsgemäßen Rotationskörpern bestückt. 2 Kästen befinden sich unmittelbar am Punkt des Zusammenfließens von Abwasser und Rücklaufschlamm und 2 Kästen am Ende des Begasungsbeckens. Nach 2monatigem Betrieb der Abwasserreinigungsanlage sind alle mit Rotationskörpern ausgerüsteten Begasungskästen voll betriebsfähig. Selbst im stark belasteten Einlaufbereich sind die Gasaustrittsöffnungen frei. Die Begasungskästen waren durch mineralische Ablagerungen verkrustet. Um die Gasaustrittsöffnungen sind kreisrunde Flächen frei von Ablagerungen. Lediglich die Spuren der Rotationskörper sind sichtbar. Der mit Rotationskörpern ausgerüstete Begasungskasten am Auslauf des Belebungsbeckens zeigt auch nach 6monatiger Betriebsdauer keine Verkrustungen durch mineralische Ausfällungen im Bereich der Laufflächen der Rotationskörper und der Ränder der Gasaustrittsöffnungen.

Der verwendete Rotationskörper hatte zwei Schlaufen und folgende Abmessungen:

| | |
|---|---|
| Abstand der Schlaufenenden voneinander | 20 mm |
| Höhe des Halsteiles | 15 mm |
| Höhe des Fußteiles | 18 mm |
| Größte Breite des Fußteiles | 20 mm |
| Winkel $\beta$ | 45° |
| Winkel $\gamma$ | 120° |
| V4A-Drahtstärken-Durchmesser | 1 mm |

Der lichte Durchmesser der Gasaustrittsöffnungen betrug 5 mm, die Oberseite hatte eine Stärke von 5 mm, die Restwandstärke betrug 1 mm und die Ansenkung hatte einen Winkel $\alpha = 120°$.

**Patentansprüche**

1. Vorrichtung zur Begasung von Abwässern in einem Begasungsbecken mit parallel nebeneinander und im Abstand zueinander angeordneten, waagerecht liegenden Begasungskästen, in deren Oberseiten Gasaustrittsöffnungen angeordnet und deren Unterseiten offen sind, wobei die Gasaustrittsöffnungen in bekannter Weise von unten je eine zentrale, einen Winkel $\alpha$ umschließende Ansenkung aufweisen und die verbliebene Restwandstärke der Gasaustrittsöffnung jeder Ansenkung 0,5 bis 2 mm beträgt, dadurch gekennzeichnet, daß in den Gasaustrittsöffnungen (13) der Begasungskästen (14) bewegliche Rotationskörper angeordnet sind.

2. Vorrichtung nach Anspruch 1, dadurch gekennzeichnet, daß der Rotationskörper aus Metall oder Kunststoff besteht.

3. Vorrichtung nach Anspruch 1 oder 2, dadurch gekennzeichnet, daß der Rotationskörper aus einem Kopf-

4

(1) und Fußteil (3) besteht, welche mit einem Halsteil (2) verbunden sind und der Kopfteil aus zwei Schlaufen (4) und (4') besteht, wobei die Achse (8) der Schlaufen (4) und (4') senkrecht zur Achse (7) des Halsteiles (2) steht und die Fläche der Schlaufen (4) und (4') um die Achse (8) um einen Winkel β geneigt ist, und das Fußteil (3) aus zwei Bügeln (6) und (6') besteht, die mit dem Halsteil (2) verbunden sind und die am Halsteil (2) miteinander einen Winkel γ bilden.

4. Vorrichtung nach einem der Ansprüche 1 bis 3, dadurch gekennzeichnet, daß der Winkel β 30 bis 60°, insbesondere 45°, beträgt.

5. Vorrichtung nach einem der Ansprüche 1 bis 4, dadurch gekennzeichnet, daß die Winkel γ und α gleich groß sind und mehr als 90°, aber weniger als 180°, vorzugsweise 100 bis 130°, insbesondere 120°, betragen.

6. Vorrichtung nach einem der Ansprüche 1 bis 5, dadurch gekennzeichnet, daß der Rotationskörper im ruhenden Zustand um 5 bis 20 mm, insbesondere 15 mm, in der Gasaustrittsöffnung (13) in Richtung der Achse (7) des Halsteiles (2) verschiebbar ist.

7. Vorrichtung nach einem der Ansprüche 1 bis 6, dadurch gekennzeichnet, daß der Rotationskörper aus Draht mit einem Durchmesser von 0,5 bis 5 mm, insbesondere von 1 bis 1,5 mm, gefertigt ist.

8. Vorrichtung nach einem der voranstehenden Ansprüche 1 bis 6, dadurch gekennzeichnet, daß der Rotationskörper aus Blechbändern gefertigt ist.

9. Vorrichtung nach Anspruch 8, dadurch gekennzeichnet, daß das Blechband eine Breite von 0,5 bis 5 mm, insbesondere von 1 bis 2 mm, und eine Dicke von 0,1 bis 0,5, insbesondere von 0,2 bis 0,3 mm, hat.

10. Vorrichtung nach einem der voranstehenden Ansprüche 1 bis 9, dadurch gekennzeichnet, daß die Schlaufe (4') als Stab (9) ausgebildet ist, der senkrecht zur Achse (7) des Halsteiles (2) angeordnet ist.

11. Vorrichtung nach einem der voranstehenden Ansprüche 1 bis 10, dadurch gekennzeichnet, daß das Fußteil (3) aus einer Schlaufe (6") und einem Stab (10) gebildet ist.

12. Vorrichtung nach Anspruch 11, dadurch gekennzeichnet, daß die Schlaufe (6") und der Stab (10) einen Winkel γ bilden.

13. Vorrichtung nach einem der Ansprüche 1 bis 9, dadurch gekennzeichnet, daß die Projektionen, in Richtung der Achse (7), der Bügel (6) und (6') gegenüber der Achse (8) um 90° verdreht sind.

14. Vorrichtung nach einem der Ansprüche 1 bis 13, dadurch gekennzeichnet, daß die Schlaufe (6") eine Achse (11) hat und die aus der Schlaufe (6") gebildete Fläche um die Achse (11) um den Winkel β verdreht ist.

15. Vorrichtung nach einem der voranstehenden Ansprüche, dadurch gekennzeichnet, daß die Neigungswinkel β der Schlaufen (4) und (4') um die Achse (8) entgegengesetzte Drehrichtungen haben.

16. Vorrichtung nach einem der voranstehenden Ansprüche, dadurch gekennzeichnet, daß die Neigungswinkel β der Schlaufe (4) um die Achse (8) und der Schlaufe (6") um die Achse (11) entgegengesetzte Drehrichtungen haben.

## Claims

1. An apparatus for fumigating waste waters in a fumigation tank with fumigation enclosures which are situated in parallel next to one another and at a distance from one another and rest horizontally, in whose upper sides gas outlet openings are situated and whose undersides are open, the gas outlet openings each having in a known manner a central countersunk section enclosing an angle a underneath and the remaining wall thickness of the gas outlet opening of each countersunk section amounting to 0.5 to 2 mm, wherein mobile rotation bodies are situated in the gas outlet openings (13) of the fumigation enclosures (14).

2. The apparatus as claimed in claim 1, wherein the rotation body is composed of metal or plastic.

3. The apparatus as claimed in claim 1 or 2, wherein the rotation body comprises a top section (1) and a base section (3) which are joined to a neck section (2) and the top section comprises two loops (4) and (4'), the axis (8) of the loops (4) and (4') being perpendicular to the axis (7) of the neck section (2) and the plane of the loops (4) and (4') being inclined around the axis (8) by an angle $\beta$, and the base section (3) comprises two bows (6) and (6') which are joined to the neck section (2) and which form an angle $\gamma$ with one another at the neck section (2).

4. The apparatus as claimed in one of claims 1 to 3, wherein the angle $\beta$ is 30 to 60°, in particular 45°.

5. The apparatus as claimed in one of claims 1 to 4, wherein the angles $\gamma$ and $\alpha$ are equal in size and are more than 90°, but less than 180°, preferably 100 to 130°, in particular 120°.

6. The apparatus as claimed in one of claims 1 to 5, wherein the rotation body can be moved in the quiescent state through 5 to 20 mm, in particular 15mm, in the gas outlet opening (13) in the direction of the axis (7) of the neck section (2).

7. The apparatus as claimed in one of claims 1 to 6, wherein the rotation body is made of wire having a diameter of 0.5 to 5 mm, in particular of 1 to 1.5mm.

8. The apparatus as claimed in one of the preceding claims 1 to 6, wherein the rotation body is made of sheet-metal strips.

9. The apparatus as claimed in claim 8, wherein the sheet-metal strip has a width of 0.5 to 5 mm, in particular of 1 to 2 mm, and a thickness of 0.1 to 0.5 mm, in particular of 0.2 to 0.3 mm.

10. The apparatus as claimed in one of the preceding claims 1 to 9, wherein the loop (4') is constructed as a rod (9) which is situated at right angles to the axis (7) of the neck section (2).

11. The apparatus as claimed in one of the preceding claims 1 to 10, wherein the base section (3) is formed from a loop (6") and a rod (10).

12. The apparatus as claimed in claim 11, wherein the loop (6") and the rod (10) form an angle $\gamma$.

13. The apparatus as claimed in one of claims 1 to 9, wherein the projections, in the direction of the axis (7), of the bows (6) and (6') are rotated through 90° with respect to the axis (8).

14. The apparatus as claimed in one of claims 1 to 13, wherein the loop (6") has an axis (11) and the plane formed from the loop (6") is rotated through the angle $\beta$ around the axis (11).

15. The apparatus as claimed in one of the preceding claims, wherein the angles of inclination $\beta$ of the loops (4) and (4') around the axis (8) have opposite directions of rotation.

16. The apparatus as claimed in one of the preceding claims, wherein the angles of inclination $\beta$ of the loop (4) around the axis (8) and of the loop (6") around the axis (11) have opposite directions of rotation.

**Revendications**

1. Appareil pour la gazéification d'eaux usées dans un bassin de gazéification comprenant des caissons de gazéification reposant horizontalement agencés parallèlement les uns à côté des autres et à distance les uns des autres, avec des ouvertures de sortie de gaz ménagées dans leurs faces supérieures et dont les faces inférieures sont ouvertes, les ouvertures de sortie des gaz présentant chacune et de manière connue un renfoncement central depuis le dessous qui inclut un angle $\alpha$, et l'épaisseur de la paroi résiduelle restante de l'ouverture de sortie des gaz de chaque dépression étant égale à 0,5 à 2 mm, caractérisé en ce que des corps rotatifs mobiles sont agencés dans les ouvertures de sortie des gaz (13) des caissons de gazéification (14).

2. Installation selon la revendication 1, caractérisée en ce que le corps rotatif est réalisé en métal ou en matière plastique.

3. Installation selon l'une ou l'autre des revendications 1 et 2, caractérisée en ce que le corps rotatif est constitué par une partie de tête (1) et une partie de pied (3), lesquelles sont reliées au moyen d'une partie de col (2), la partie de tête étant constituée par deux crochets aplatis (4) et (4'), l'axe (8) des crochets (4) et (4') étant perpendiculaire à l'axe (7) de la partie de col (2), et la surface des crochets (4) et (4') étant inclinée autour de l'axe (8) d'un angle β, et la partie de pied (3) étant constituée de deux boucles (6) et (6') qui sont reliées à la partie de col (2) et qui forment l'une avec l'autre un angle γ au niveau de la partie de col (2).

4. Installation selon l'une quelconque des revendications 1 à 3, caractérisée en ce que l'angle β est de 30 à 60° en particulier 45°.

5. Installation selon l'une quelconque des revendications 1 à 4, caractérisée en ce que les angles γ et α sont égaux et supérieurs à 90°, mais inférieurs à 180°, de préférence entre 100 et 130°, en particulier égaux à 120°.

6. Installation selon l'une quelconque des revendications 1 à 5, caractérisée en ce que le corps rotatif peut être déplacé dans la condition de repos sur 5 à 20mm, en particulier 15mm, dans l'ouverture de sortie des gaz (13) en direction de l'axe (7) de la partie de col (2).

7. Installation selon l'une quelconque des revendications 1 à 6, caractérisée en ce que le corps rotatif est fabriqué en fil avec un diamètre de 0,5 à 5 mm, en particulier 1 à 1,5 mm.

8. Installation selon l'une quelconque des revendications précédentes 1 à 7, caractérisée en ce que le corps rotatif est fabriqué à partir de bandes de tôle.

9. Installation selon la revendication 8, caractérisée en ce que la bande de tôle a une largeur de 0,5 à 5 mm en particulier de 1 à 2 mn, et une épaisseur de 0,1 à 0,5, en particulier de 0,2 à 0,3 mm.

10. Installation selon l'une quelconque des revendications précédentes 1 à 9, caractérisée en ce que le crochet (4') est réalisé sous la forme d'une tige (9) qui est agencée perpendiculairement à l'axe (7) de la partie de col (2).

11. Installation selon l'une quelconque des revendications précédentes 1 à 10, caractérisée en ce que la partie de pied (3) est formée par un crochet aplati (6") et une tige (10).

12. Installation selon la revendication 11, caractérisée en ce que le crochet (6") et la tige (10) forment un angle γ.

13. Installation selon l'une quelconque des revendications 1 à 9, caractérisée en ce que les projections, en direction de l'axe (7), des boucles (6) et (6') sont tournées de 90° par rapport à l'axe (8).

14. Installation selon l'une quelconque des revendications 1 à 13, caractérisée en ce que le crochet (6") possède un axe (11), et en ce que la surface formée par le crochet (6") est tournée de l'angle β autour de l'axe (11).

15. Installation selon l'une quelconque des revendications précédentes, caractérisée en ce que les angles d'inclinaison β des crochets (4) et (4') sont orientés dans des directions opposées autour de l'axe (8).

16. Installation selon l'une quelconque des revendications précédentes, caractérisée en ce que les angles d'inclinaison β du crochet (4) autour de l'axe (8) et du crochet (6") autour de l'axe (11) sont orientés dans des directions opposées.

Fig. 1

Fig. 2

Fig. 3                                          Fig. 4

Fig. 5